(19) **Europäisches Patentamt / European Patent Office / Office européen des brevets**

(11) **EP 1 956 347 A2**

(12) # EUROPEAN PATENT APPLICATION

(43) Date of publication:
**13.08.2008 Bulletin 2008/33**

(51) Int Cl.:
*G01F 1/10* (2006.01)    *G01F 25/00* (2006.01)
*F01D 5/14* (2006.01)

(21) Application number: **08250158.6**

(22) Date of filing: **14.01.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **08.02.2007 US 704038**

(71) Applicant: **Pratt & Whitney Rocketdyne Inc.
Canoga Park, CA 91309 (US)**

(72) Inventors:
 • **Bodgan, Marcu
   Sierra Madre, CA 91024 (US)**
 • **Ubowski, John
   Santa Clarita, CA 91390 (US)**

(74) Representative: **Chiva, Andrew Peter
   Frank B. Dehn & Co.
   St Bride's House
   10 Salisbury Square
   London EC4Y 8JD (GB)**

(54) **Tapered, frequency-tuned rotor for turbine flow meter**

(57)    A frequency-tuned turbine flow meter rotor (30) comprises a rotor hub and a plurality of tapered rotor blades. Each of the plurality of rotor blades has a stagger angle that varies as a function of a radius measured from the hub, and a cross-sectional profile that is tapered according to a NACA airfoil design. A method for designing a frequency-tuned flow meter rotor (30) comprises defining a cross-sectional profile, calibrating a rotor blade stagger angle, tapering the cross-sectional profile such that it characterizes an airfoil with a decreasing chord length and a decreasing relative thickness as a function of radius, and analyzing a natural oscillation frequency spectrum of the rotor (30) with respect to a range of operationally-induced excitation frequencies.

**FIG. 1**

**Description**

BACKGROUND OF THE INVENTION

Contemporary aerospace applications, both commercial and scientific in nature, are characterized by increasing payload demands. These payloads can require millions of pounds-force in liftoff thrust, which must be managed with precision dynamical control in order to maintain a viable flight path and achieve stable orbit. This raises a number of technical design challenges. Among these, the fuel-oxidant mixture ratio remains a key issue for rocket motor design, with mission-critical implications. Maintaining the correct mixture ratio requires precise measurement and control of extremely high-rate and highly variable fuel and oxidant flows, each with tolerances below one percent. The prior art is insufficiently capable of meeting this need, with particular respect to liquid hydrogen flow in the space shuttle main engine.

The two basic approaches to maintaining the fuel-oxidant mixture ratio are solid-fuel and liquid-fuel designs. Solid-fuel rocket motors employ premixed fuel and oxidant, guaranteeing the correct ratio and obviating the need for flow control. Unfortunately, solid-rocket technology has significant limitations. Once ignited, solid rocket motors essentially cannot be shut down. A limited degree of bum rate management can be achieved by tailoring the fuel profile (that is, the surface area available for bum), and some level of attitude control can be achieved via gimbaled nozzles. These techniques are insufficient, however, to achieve the precision required for stable earth orbit, much less an interplanetary trajectory. For these and other technical reasons solid-fuel rocket motors are generally limited to specific power applications such as liftoff assist, with the Space Shuttle Solid Rocket Booster (SRB) system being a primary example.

Precision spaceflight thus requires liquid-fuel rocket motor technology, which in turn requires precise control of the fuel-oxidant mixture ratio. This problem is approached via a series of low-pressure and high-pressure fuel and oxidant pumps, each with feedback control provided by precision flow meters. The flow meters themselves fall into two general categories, which employ either indirect or direct measurement techniques.

Most indirect flow meters, including both simple flow nozzles and more sophisticated Venturi tube designs, incorporate differential pressure technology. This technology in turn depends upon Bernoulli's Principle. Neglecting the gravitational potential, Bernoulli's Principle may be expressed in a simple form of Bernoulli's Equation:

$$\Delta P = \frac{1}{2}\rho\Delta(v^2). \qquad (1)$$

Eq. 1 relates the pressure differential $\Delta P$ across a small region of restricted flow to one-half the flow density $\rho$ times the difference in the square of the flow velocity $\Delta(v^2)$. This allows a differential pressure flow meter to compare a high-pressure, low-velocity flow on one side of the restriction to a low-pressure, high-velocity flow on the other side of the restriction.

Differential pressure flow meters can be designed so that they introduce no moving parts into the flow stream, which is a clear advantage for high-velocity, high-volume flows. Nonetheless the technology exhibits disadvantages as well. Differential pressure flow meters measure relative flow velocity, not absolute flow, and the relationship between flow and differential pressure is not linear. Differential pressure measurements also require a mechanical flow restriction, which limits overall capacity and introduces turbulence. The pressure drop $\Delta P$, moreover, cannot be fully recovered even in sophisticated Venturi tube designs. This requires additional pumping capacity, limits performance, and compromises efficiency.

Pitot tubes operate in a somewhat different fashion, by relating the kinetic energy of the flow to pressure. The mathematical relationship, however, is still nonlinear, as kinetic energy also depends upon the square of the flow velocity. Pitot tube technology is also less appropriate to liquid flows than to compressible fluid flows, which generally restricts its application to fluid gas devices such as air speed indicators. Pitot tubes, moreover, like all differential pressure devices, represent point measurements and are generally less sensitive to non-uniformities such as laminar flow and turbulence. To the extent that these non-uniformities approach even one percent of the total flow, they may impose mission-critical precision limits.

Electromagnetic induction flow meters provide a different approach, by measuring the current induced in a conductive flow as it passes through a region of strong magnetic field. The induced current depends linearly on the flow rate, rather than its square. Electromagnetic induction flow meters are further bi-directional and can be applied to corrosive solutions and many hazardous wastes, for which other technologies are inappropriate.

Few of these advantages, however, are directly applicable to rocket motor design. Electromagnetic induction flow meters require an external magnetic coil structure, which is costly in terms of both space and mass. The induction of a strong electric current loop in the flow also poses technical and safety concerns, making the technology impractical for most liquid-fuel rocket motor designs, and in particular for liquid hydrogen (LH2) applications on the Space Shuttle Main Engine (SSME).

In contrast to indirect measurement techniques, turbine flow meters are lightweight, space efficient, and provide a direct, linear measurement of the absolute flow rate. Turbine flow meters must operate directly in the flow, however, which in the case of SSME LH2 flow may exceed ten thousand gallons per minute. This subjects the flow meter rotor to significant stress, and introduces a potential single-point failure mode. Thus there remains a need for a precise, reliable, and mission-appropriate flow meter design, which is unavailable in the prior art.

BRIEF SUMMARY OF THE INVENTION

This invention concerns a tapered rotor blade and frequency-tuned rotor for a turbine flow meter. The rotor blade has a variable stagger angle and a tapered airfoil profile that tunes the frequency of the first bending mode of the rotor, such that it lies outside a range of operationally-induced excitation frequencies. In one embodiment, the rotor blade is tapered according to a modified NACA (National Advisory Committee for Aeronautics) four-digit series airfoil profile, and the frequency-tuned rotor is a novel rotor for the Space Shuttle Main Engine liquid hydrogen (SSME LH2) turbine flow meter.

This invention also concerns a method for designing a frequency-tuned flow meter rotor having a rotor hub and a plurality of tapered rotor blades. The method comprises defining a rotor blade cross-sectional profile and calibrating a rotor blade stagger angle, each as function of a radius defined from the rotor hub, tapering the cross-sectional profile such that it characterizes an airfoil with a decreasing chord length and a decreasing relative thickness as a function of radius, and analyzing the natural oscillation frequency spectrum of the rotor with respect to a range of operationally-induced excitation frequencies.

BRIEF DESCRIPTION OF THE DRAWINGS

FIG. 1 is a cutaway view of the space shuttle main engine liquid hydrogen duct, showing the location of the turbine flow meter.

FIG. 2 is a schematic view of the first and second bending modes characteristic of a four-blade rotor design.

FIG. 3 is a perspective view of a novel turbine flow meter rotor according to this invention.

FIG. 4 is a perspective view of a novel turbine flow meter rotor blade according to this invention.

FIG. 5 is a series of cross-sectional views comparing the novel rotor blade to the prior art.

FIG. 6 is a schematic diagram showing the loading on an isolated airfoil, with force decomposition in a vertical direction.

FIG. 7 is an overlay view showing stagger angle and cross-sectional profiles for the novel rotor blade.

FIG. 8 is a calibration plot showing rotor speed versus flow rate, obtained from hot-fire tests of a subset of ten prior art flow meter rotors.

FIG. 9 is a series of calibration plots showing apparent angle of incidence versus flow rate, obtained from hot-fire tests of a subset of ten prior art flow meter rotors.

FIG. 10 is a flow chart showing a method for designing a frequency-tuned flow meter rotor having a rotor hub and a plurality of tapered rotor blades.

DETAILED DESCRIPTION

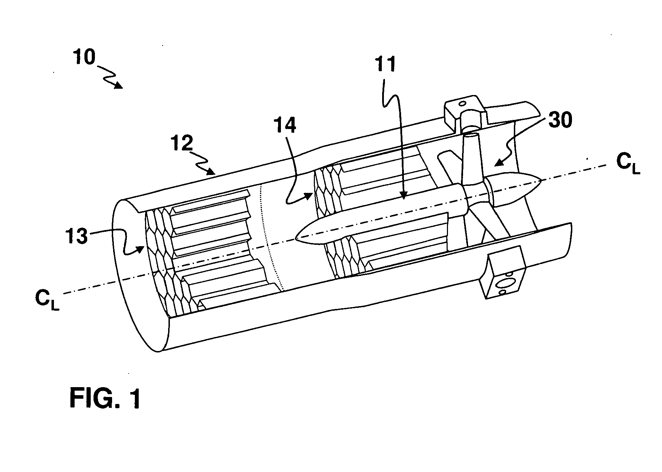

FIG. 1 is a cutaway view of SSME LH2 duct 10, showing the location of turbine flow meter 11 with novel rotor 30. LH2 duct 10 is situated between the low-pressure fuel pump discharge, located upstream (that is, to the left) of FIG. 1, and the high-pressure pump intake, located downstream (that is, to the right) of FIG. 1.

LH2 duct 10 comprises duct wall 12, upstream hexagonal flow straightener 13, downstream hexagonal flow straightener 14, and flow meter 11. Flow is downstream and axial; that is, from left to right and generally parallel to centerline axis $C_L$.

Flow straighteners 13 and 14 comprise sets of vanes forming a "honeycomb" of hexagonal channels in the LH2 duct. The channels straighten the LH2 flow by reducing rotation and turbulence before impingement on novel turbine flow meter rotor 30. Note that upstream flow straightener 13 exhibits a "straight back" configuration, in which the vanes terminate in a plane perpendicular to axial centerline $C_L$. In the straight back configuration all channels have the same length. Downstream flow straightener 14 exhibits a novel "cut back" configuration, for deployment with novel rotor 30. In the cut back configuration, the vanes of downstream flow straighter 14 terminate in a cone oriented perpendicular to axial centerline $C_L$. The apex of the cone is on axial centerline $C_L$, such that the channel length decreases with distance from the axis.

SSME LH2 flow meter 11 has flow meter rotor 30 positioned just downstream of downstream hexagonal flow straightener 14. Flow meter 11 exhibits significant design advantages with respect to non-turbine-type flow meters, and with respect to prior art turbine flow meter rotors.

Turbine flow meter 11 is a lightweight and space-efficient design, and is readily applicable to LH2 flow applications as required by the SSME. More broadly, turbine flow meter 11 may also be applied to liquid oxygen (LOX) and other flows characteristic of liquid-fuel rocket motors. Turbine flow meter 11 does not require a substantial flow restriction, and, along with flow straighteners 13 and 14, is designed to minimize residual turbulence.

This contrasts with prior art differential pressure devices, which inherently restrict flow and are inherent sources of turbulence. Differential pressure techniques furthermore sample only a portion of the total flow, while turbine flow meter 11 is positioned such that rotor 30 sweeps out essentially the entire circular cross section of LH2 duct 10. This provides an integral flow measure, incorporating both bulk axial flow and non-uniformities due to residual turbulence or local regions of laminar flow.

Turbine flow meter 11 furthermore measures the LH2 flow rate directly from the rotational speed of rotor 30, as compared to indirect measurements based upon differential pressure or electromagnetic induction. This yields a very nearly linear relationship between rotational speed and the LH2 flow rate, applicable over a wide operational range. This linearity is characterized by calibration factor $K_f = 4 \cdot \text{RPM/GPM}$, relating the rotor speed in rotations per minute (RPM) to the LH2 volume flow rate in gallons per minute (GPM). The calibration factor includes an explicit factor of four to account for the four-blade design shared by rotor 30 and the prior art.

In addition to its inherent advantages over non turbine-type flow meters, novel rotor 30 also exhibits advantages over prior art rotor designs. As FIG. 1 shows, turbine flow meter 11 is situated in a region of high operational stress, due both to the high flow rate and the wake of downstream flow straightener 14. As novel rotor 30 rotates through successive momentary stall regions in this wake, it experiences a periodic excitation. The excitation frequency is determined by the rotor speed and the hexagonal design of flow straighteners 13 and 14, which produce what is referred to as a "12N" symmetry pattern. The 12N symmetry pattern is characteristic of the vertex spacing in hexagonal tiling, and excites the turbine flow meter rotor at twelve times the rotor speed in RPM. A key advantage of novel rotor 30, with respect to the prior art, lies in its response to this operationally-induced excitation.

The prior art flow meter has a broad natural resonance centered at a frequency of approximately 830 Hz. At rotational speeds approaching 4,000 RPM, the 12N symmetry pattern excites the rotor at about 800 Hz. As this excitation frequency approaches the prior art rotor's natural resonance, a number of problematic phenomena are observed. Specifically, as the prior art rotor approaches 4,000 RPM, it exhibits rotor speed fluctuations and "$K_f$ shifting," an apparent shift in the value of calibration factor $K_f$, unaccompanied by any actual change in the LH2 flow rate.

The frequency of the rotor speed fluctuations is difficult to precisely measure, because the rotor speed is sampled only four times per rotation. Rotor speed sampling is accomplished via a magnetic inductive pickup, which registers a "pip" each time a rotor blade tip passes a fixed location along the rotor arc (that is, four pips per revolution). The 12N excitation frequency is necessarily a harmonic of the pip frequency, because both depend upon the rotational speed. This introduces beats between the rotor speed fluctuations and the pip frequency, a phenomenon referred to as "aliasing."

Aliasing masks the true rotor speed fluctuation frequency, but the phenomenon is clearly related to the 12N symmetry pattern in the flow straightener wake, and to rotor speeds in excess of 3,800 RPM. Along with the related phenomena of $K_f$ shifting and aliasing, rotor speed fluctuations significantly compromise the prior art rotor's performance.

The solution to this problem must encompass not only the rotor itself, but also its operational environment. This requires a short history of the SSME LH2 duct.

The prior art flow meter rotor was originally deployed with an "egg crate" (square channel) flow straightener design, not the current hexagonal design. The egg crate flow straighteners did not have a 12N symmetry pattern, and did not exhibit the corresponding 12N excitation frequencies.

When the SSME LH2 duct was reconfigured, the flow meter was simultaneously redeployed to a new location approximately one inch behind the downstream (hexagonal) flow straightener, as opposed to about two inches in the original egg crate design. The LH2 duct reconfiguration thus not only introduced the 12N symmetry pattern, but also exacerbated its effect by effectively halving the gap between the rotor and the downstream flow straightener.

Novel rotor 30, as deployed in FIG. 1, addresses both aspects of this problem. First, while upstream flow straightener 13 exhibits a straight back configuration, as in the prior art, downstream flow straighter 14 exhibits a novel cut back configuration. The cut back configuration increases the spacing between downstream flow straightener 14 and the rotor blades, decreasing the effect of wake flow symmetry patterns on novel rotor 30.

Second, novel rotor 30 does not have the same natural frequencies of oscillation as the prior art rotor. This is due to the tapering of the novel rotor blades, which alters the natural frequencies of the rotor. In particular, tapering increases the frequencies of the first and second bending modes, so that they lie above the range of operationally-induced excitation frequencies.

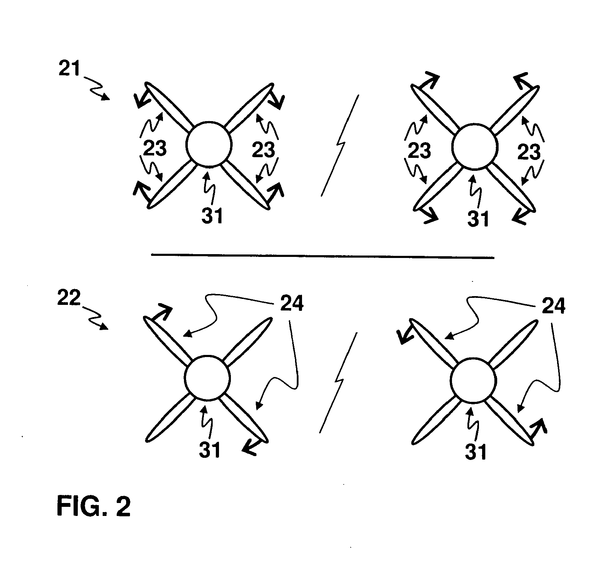

FIG. 2 is a schematic view of first bending mode 21 and second bending mode 22, characteristic of a four-blade rotor design. This four-blade design is shared by both the prior art rotor and novel SSME LH2 flow meter rotor 30.

First bending mode 21 shows rotor hub 31 and the oscillation of two pairs of adjacent rotor blades 23. In first bending mode 21, adjacent pairs 23 oscillate in tandem, with paired blade tips alternately bending toward each other (left-hand image), and then away from each other (right-hand image). The blade tips follow the rotational arc of the rotor; that is, the oscillations occur in a tangential sense. First bending mode 21 is also known as the fundamental mode, and has the lowest frequency of any natural mode of oscillation of the rotor.

Second bending mode 22 shows rotor hub 31 and the oscillation of one pair of opposite rotor blades 24. In second bending mode 22, opposite pair of blades 24 oscillates tangentially, while the two remaining blades remain stationary. Second bending mode 22 is the first excited mode, and is closely spaced in frequency with respect to first bending mode 21.

The close spacing of first bending mode 21 and second bending mode 22 is characteristic of a four-blade rotor design. This increases the overall width of the resonance, and broadens the range of relevant excitation frequencies. The closely-spaced nature of mode 21 and mode 22 may also facilitate the transfer of oscillatory energy back and forth between the two, making it difficult to distinguish one mode from the other.

For the prior art rotor, first bending mode (fundamental mode) 21 has a natural frequency of approximately 830 Hz. Combined with closely-spaced second bending mode (first excited mode) 22, this creates a broad resonance above 800 Hz. As the rotor speed approaches 4,000 RPM, operationally-induced excitations due to the 12N hexagonal symmetry pattern approach this threshold frequency, and subject the prior art rotor to the phenomena of $K_f$ shifting, aliasing, and rotor speed fluctuations.

These phenomena significantly degrade the accuracy of the flow meter, and raise critical reliability questions. In response, the National Aeronautics and Space Administration (NASA) has established an upper limit of 3,800 RPM on the prior art rotor speed. This limit restricts the total available LH2 flow and precludes the SSME from reaching a 115% rated power level.

The novel flow meter rotor blade and rotor disclosed here are designed to address this problem by tapering the blades of novel rotor 30. This retains the general advantages of a turbine flow meter design, while "tuning" novel rotor 30 such that its natural frequencies of oscillation lie outside the range of operationally-induced excitation frequencies. This approach has utility beyond the shuttle fleet, in a broad range of applications where high-rate, high-precision flow measurement is required, and where the turbine rotor may be subject to significant stress or turbulent effects.

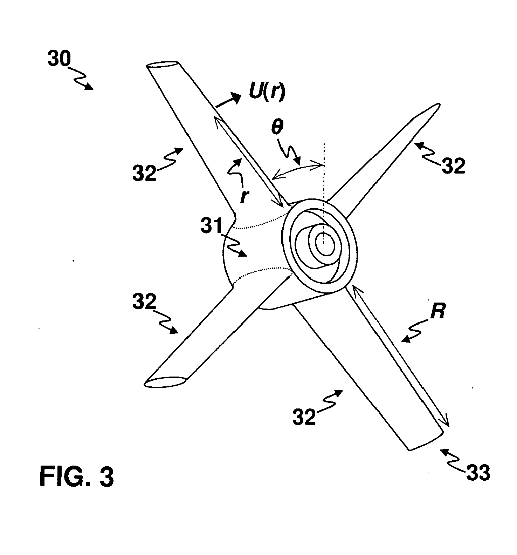

FIG. 3 is a perspective view of novel SSME LH2 turbine flow meter rotor 30, according to this invention. Rotor 30 comprises rotor hub 31 and four rotor blades 32, arranged radially around rotor hub 31.

Each rotor blade 32 is characterized by an airfoil cross-sectional profile perpendicular to radius $r$, where $r$ varies from a minimum of $r = 0$ at rotor hub 31 to a maximum of $r = R$ at rotor blade tip 33. Tangential angle θ is measured from an arbitrary axis, which is oriented vertically in FIG. 3. Velocity $U(r)$ is the rotational velocity of rotor blade 32 at radius $r$, measured tangentially with respect to the rotation.

In contrast to the prior art rotor blades, which had a generally uniform cross-sectional profile as a function of radius, novel rotor blades 32 are tapered. Specifically, the cross-sectional profile is relatively larger near rotor hub 31, and relatively smaller near rotor blade tip 33. This tapering has a number of important design advantages, as disclosed below.

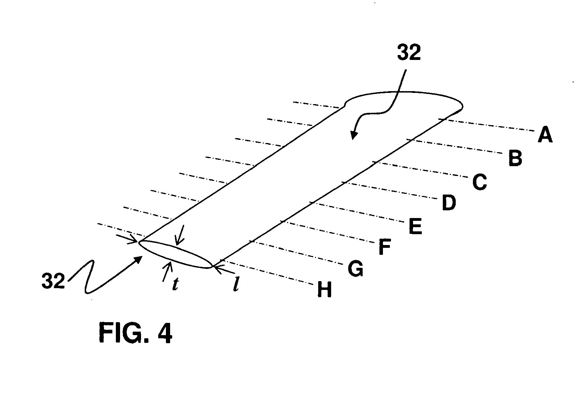

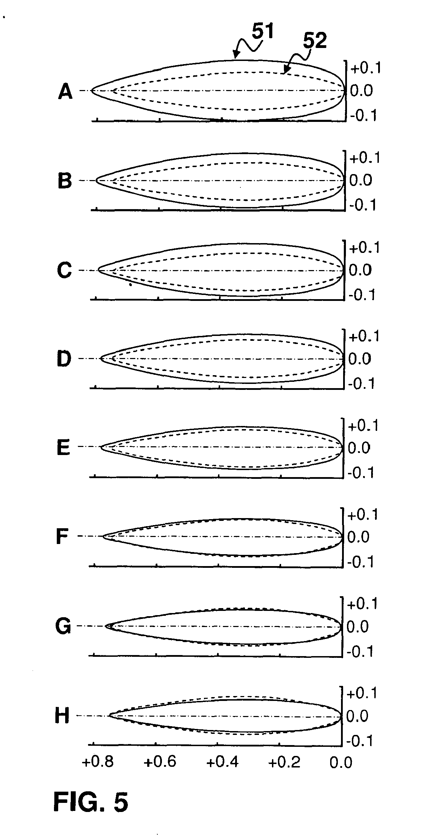

FIG. 4 is a perspective view of novel SSME LH2 turbine flow meter rotor blade 32, according to this invention. FIG. 4 shows chord length dimension $l$ and relative thickness dimension $t,$ as measured near blade tip 33. In general, chord length $l(r)$ and relative thickness $t(r)$ will vary as functions of radius $r$, with $l(r)$ measured from the leading edge to the trailing edge and $t(r)$ being the maximum thickness of the airfoil, relative to chord length $l(r)$. FIG. 4 also shows projected lines A-H, along which the cross-sectional views of FIG. 5 are taken.

FIG. 5 is a series of cross-sectional views comparing novel rotor blade 32 to the prior art. FIG. 5 shows eight equally-spaced radial cross sections, taken along projected lines A-H of FIG. 4. Novel cross sections 51 are shown in solid lines, with corresponding prior art cross sections 52 in dashed lines.

In FIG. 5 radius $r$ varies linearly from $r \approx 0$ for the proximal (top) cross section, to $r \approx R$ for the distal (bottom) cross section. The horizontal axis gives the chord length $l(r)$, and the vertical axis gives the relative thickness $t(r)$. Both axes are scaled in arbitrary units.

Whereas prior art cross sections 52 have generally uniform chord length and relative thickness, novel cross sections 51 do not. Instead, novel cross sections 51 are tapered such that chord length $l(r)$ and relative thickness $t(r)$ decrease as a function of radius $r$, and such that the cross-sectional profile corresponds at each radius $r$ to a modified NACA (National Advisory Committee for Aeronautics) four-digit series airfoil profile.

A four-digit series NACA airfoil gives the maximum camber, or asymmetry, in the first digit (as a percentage), and the location of the maximum camber point in the second digit (in tens of percents of the chord length, as measured from the leading edge). The last two digits give the maximum thickness $t(r)$ as a percentage of the chord length $l(r)$.

In a modified NACA four-digit series airfoil design, as exhibited by novel rotor blade cross sections 51, two additional digits give the leading edge roundness, on a scale of zero to nine, and the point of maximum thickness, in tens of percents of the chord length. The default (unmodified) roundness is six (first modified NACA digit 6), with lower values indicating a sharper leading edge and higher values indicating blunter leading edge. The default (unmodified) point of maximum thickness is located at 30% of the chord length (second modified NACA digit 3). Lower values indicate a point of maximum thickness closer to the leading edge, and higher values indicate a point of maximum thickness closer to the trailing edge.

FIG. 5 represents the end result of fourteen design iterations, each iteration consisting of tapering the airfoil according to a modified NACA four-digit series airfoil design, translating the tapered profile into a software model of the complete rotor, and analyzing the stress and oscillation response of the result. In general, novel rotor blade cross sections 51 are approximately symmetric, with little camber. In the proximal (upper left) cross section of FIG. 5, where $r \approx 0$, chord length $l(r)$ of novel rotor blade cross section 51 (solid outline) is approximately 9% greater than that of prior art rotor blade cross section 52 (dashed outline). The maximum relative airfoil thickness $t(r)$ is 24% of chord length $l(r)$, which is relatively thicker than prior art cross section 52.

As $r$ increases, the chord length $l(r)$ of novel cross section 51 decreases toward that of prior art cross section 52, until the two have nearly equal chord lengths in the distal cross section, where $r \approx R$. In the distal cross section the relative thickness $t(r)$ of novel cross section 51 is 13% of chord length $l(r)$, which is actually thinner than prior art cross section 52.

Essentially, tapering increases blade mass near the rotor hub, and decreases blade mass near the blade tip, while conforming to an airfoil cross section (in this embodiment, a modified NACA four-digit airfoil cross section) for all radii between $r = 0$ and $r = R$. This increases the natural frequency of the first bending mode, from approximately 830 Hz, for the prior art rotor, to approximately 1300 Hz for the novel rotor.

This places the first bending mode outside the range of operationally-induced excitation frequencies associated with 12N wake symmetry, for rotor speeds in excess of 4,000 RPM. Note that the second bending mode remains closely spaced with respect to the first bending mode, and is also shifted out of the relevant range.

Moreover, the first and second bending modes are also shifted above any 18N wake symmetry excitations. The 18N pattern is associated with hexagonal edge spacing, as opposed to vertex spacing for the 12N pattern. The 18N pattern has the highest basic symmetry number for hexagonal geometry, and yields operationally-induced excitation frequencies of approximately 1,200 Hz for rotor speeds approaching 4,000 RPM.

The first and second bending modes are the lowest-frequency natural oscillations of the rotor. Thus novel rotor 30 has no natural oscillation frequencies susceptible to operationally-induced excitations at rotor speeds of up to 4,000 RPM, and does not exhibit rotor speed fluctuations, $K_f$ shifting, or aliasing in this region. This extends the operational range of the SSME LH2 turbine flow meter to 4,000 RPM, as opposed to 3,800 RPM for the prior art, and removes the prior art restriction on maximum SSME thrust.

Note also that even in the cut-back configuration of downstream hexagonal flow straighter 14, there is still only approximately one inch of clearance near the rotor hub. The novel rotor design minimizes the effects of strong wake structures in this region, by increasing the chord length and thickness of the rotor blade. The stronger blade design of also reduces stress effects.

Novel rotor 30 also increases sensitivity along the upper half of the rotor blade, where $r > R/2$. The upper half of the blade is farther from the flow straighter than the lower half, because of the cut back flow straightener configuration. Thus the upper half of the rotor blade travels through a less perturbed flow field, and increased sensitivity in this region provides a more accurate measure of LH2 flow.

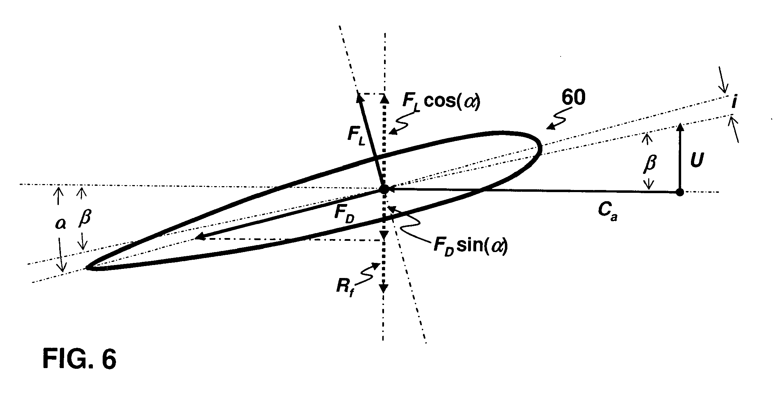

FIG. 6 is a schematic diagram showing the loading on isolated airfoil 60, with force decomposition in a vertical direction. The fluid flow has uniform axial velocity $C_a$, and airfoil 60 has vertical velocity $U$. This yields relative flow angle $\beta$ as shown.

FIG. 6 illustrates a critical aspect of the novel design approach disclosed here. The SSME LH2 turbine flow meter rotor has only four blades, each of which operates essentially independently as an individual, isolated airfoil. This contrast strongly with a typical power turbine rotor, which has a larger number of closely-spaced, multiply adjacent blades.

In a multiply-adjacent design, blade loading is maximized. There is a high degree of fluid turning, with strong interactions between the fluid and adjacent blades. FIG. 6, in contrast, illustrates the isolated environment typical of SSME LH2 turbine flow meter blade 32, in which fluid turning and other interactions are minimized. This is similar to the situation of an isolated aircraft wing, and allows a novel application of aircraft design methods to the problem of LH2 flow.

As a preliminary matter, note that airfoil 60 in FIG. 6 has a symmetric profile; that is, it has no camber. This means the angle of incidence $i$ must be nonzero in order to produce net lift. It follows that stagger angle $\alpha$, which is the angle of airfoil 60 with respect to the axial flow velocity, cannot in general be equal to relative flow angle $\beta$.

FIG. 6 shows that flow impinges on airfoil 60 with angle of incidence $i$, where $i$ is the difference between stagger angle $\alpha$ and relative flow angle $\beta$. That is,

$$i = \alpha - \beta. \qquad\qquad (2)$$

If airfoil 60 is an isolated flow meter rotor blade, vertical velocity $U$ is simply tangential velocity $U(r)$ as indicated in FIG. 3. Stagger angle $\alpha$ determines the components of the lift force $F_L$ and drag force $F_D$ in this tangential direction:

$$F_L(U) = +F_L\cos(\alpha) \qquad\qquad (3)$$

and

$$F_D(U) = -F_D\sin(\alpha). \qquad\qquad (4)$$

As airfoil 60 rotates, it will reach a tangential velocity $U(r)$ such that the tangential lift and drag components (Eqs. 3 and 4) are equal and opposite to the frictional force $R_f$ due to the resistance of the rotor bearings. That is,

$$F_L\cos(\alpha) = F_D\sin(\alpha) + R_f, \qquad\qquad (5)$$

where stagger angle $\alpha$ is related to angle of incidence $i$ and relative flow angle $\beta$ by Eq. 2.

In general, the tangential velocity $U(r)$ of a rotor blade varies linearly with radius $r$, a characteristic relationship for any solid rotating body. Thus relative flow angle $\beta(r)$ also varies with $r$, and, in order to obtain the required angle of incidence $i(r)$, the rotor blades must have a variable stagger angle $\alpha(r)$. Stagger angle $\alpha(r)$ characterizes the blade "twist," which varies such that the lift at each radius $r$ is sufficient to obtain a tangential velocity $U(r)$ that increases linearly with $r$.

To the extent that fluid velocity $C_a$ represents a uniform axial flow and frictional force $R_f$ is small, the required lift is small as well. In this case stagger angle $\alpha(r)$ characterizes a "free vortex" twist design, in which $\alpha(r)$ is approximately equal to flow angle $\beta(r)$, and angle of incidence $i(r)$ is small everywhere from the hub at $r = 0$ to the tip at $r = R$.

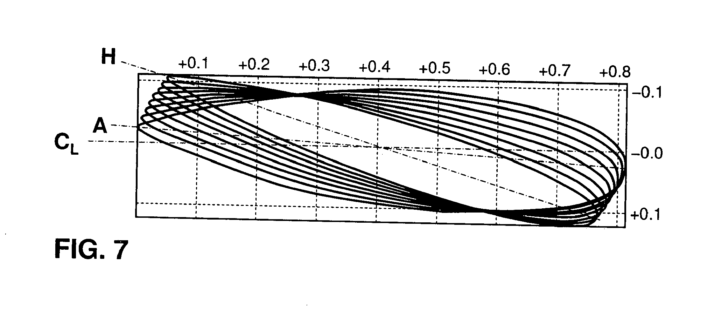

FIG. 7 is an overlay view showing stagger angle $\alpha(r)$ and cross-sectional profiles for the novel rotor blade. FIG. 7 shows the eight equally-spaced radial cross sections of FIG. 5, taken along projected lines A-H of FIG. 4. The proximal cross section lies along projected line A, and the distal cross section along projected line H. The cross sections are oriented with respect to axial centerline $C_L$, in order to show stagger angle $\alpha(r)$.

TABLE 1 further illustrates the difference between novel stagger angle $\alpha(r)$ in FIG. 7, and prior art stagger angle $\alpha'(r)$. TABLE 1 provides prior art stagger angle $\alpha'(r)$ (column 2), idealized angle of incidence $i'(r)$ (column 3), and apparent angle of incidence $i(r)$ (column 4), each at four relative radii corresponding to $r/R$ = 8.6%, 38.3%, 68.0%, and 97.7%, respectively (column 1).

As described above, prior art stagger angle $\alpha'(r)$ is simply the angle of the prior art blade with respect to the axis of the rotor. Idealized angle of incidence $i'(r)$ is the angle of incidence obtained from $\alpha'(r)$ when assuming an idealized, uniform axial flow. In contrast, apparent angle of incidence $i(r)$ is the angle of incidence inferred from actual hot-fire calibration tests, which provide important data for the novel rotor design.

**TABLE 1**

| Radius | Stagger Angle | Angle of Incidence | |
|---|---|---|---|
| $r/R$ (%) | $\alpha'(r)$ | $i'(r)$ (idealized) | $i(r)$ (apparent) |
| 8.6% | 4.9° | -0.0049° | +0.04° |
| 38.3% | 9.06° | +0.0016° | +0.07° |
| 68.0% | 13.13° | -0.0011° | +0.10° |
| 97.7% | 17.06° | +0.0044° | +0.13° |

Prior art stagger angle $\alpha'(r)$ and idealized angle of incidence $i'(r)$ were reconstructed from the mean values from ten prior art rotors, assuming uniform axial flow and averaging over known manufacturing variations. The ten rotors are a subset of the total shuttle fleet rotor stock, none of which has a recorded operational anomaly. TABLE 1 indicates that the prior art rotor has an idealized free-vortex twist design, in which idealized angle of incidence $i'(r)$ is close to zero everywhere along the blade (column 3).

Novel rotor blade 32 improves on the prior art by defining novel stagger angle $\alpha(r)$ according to the apparent angle of incidence $i(r)$, rather than idealized angle of incidence $i'(r)$. That is, rather than calibrating the rotor to account for the difference between $i'(r)$ and $i(r)$, novel rotor blade 32 incorporates this difference into novel stagger angle $\alpha(r)$. Novel rotor 30 is thus inherently more accurate than the prior art, because its blade design inherently accounts for non-axial flow effects, at least to the extent that they are characterized by apparent angle of incidence $i(r)$. This approach not only makes calibration factor $K_f$ more accurate, but also allows $K_f$ to be modified or tailored to a specific flow meter application, in which a particular rotor speed may be desired for a particular flow rate.

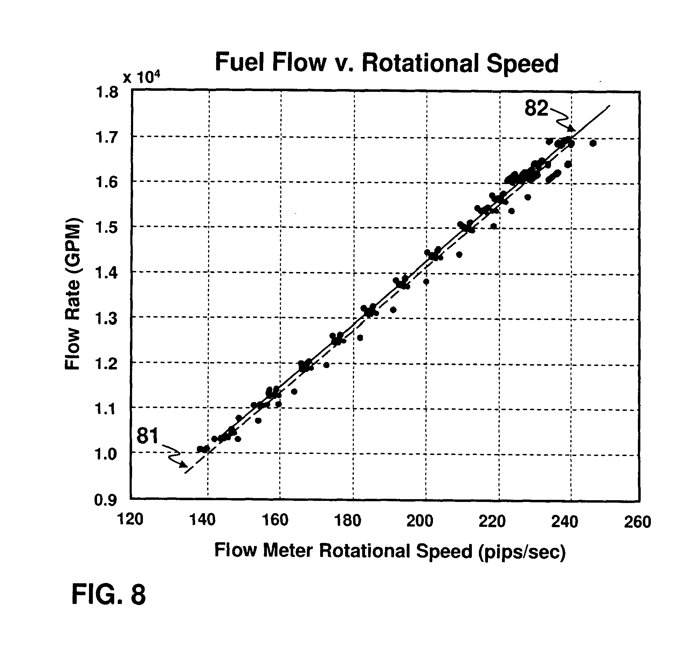

FIG. 8 is a calibration plot showing rotor speed versus flow rate, obtained from hot-fire tests of the subset of ten prior art rotors. The LH2 flow rate is given in gallons per minute (GPM), and the flow meter rotational speed is given in pips/sec. A pip represents the passage of one rotor blade through the field of an inductive magnetic sensor. There are four pips per rotation, so the rotational speed in RPM is just the pip rate multiplied by fifteen (sixty seconds per minute, divided by four pips per rotation).

FIG. 8 illustrates an important limitation in the prior art, that is addressed by novel rotor 32. Nominal or "zero incidence" line 81 represents the idealized case, which corresponds to perfectly axial flow at all radii. This yields idealized flow calibration constant $K_f' = 0.8777$. The flow is not, however, perfectly axial, as indicated by linear fit 82, which yields apparent flow calibration constant $K_f = 0.8708$. Apparent flow calibration constant $K_f$ is approximately 0.79% less than idealized calibration constant $K_f'$. This exceeds the design tolerance, because LH2 flow for the SSME must be regulated to less than one half of one percent.

The difference between zero-incidence line 81 and calibration line 82 corresponds to the corrections from idealized angle of incidence i'(r) to apparent angle of incidence $i(r)$ in TABLE 1, columns 3 and 4, above. That is, if the flow were perfectly uniform and the rotor were turning at the speed indicated by calibration line 82, the actual angle of incidence on the blades would be the apparent angles of incidence i(r) in TABLE 1, column 4. Novel rotor blade 32 incorporates this effect into its design, while the prior art does not.

Note that in the preferred embodiment described by FIGS. 1, 3-5 and 7, above, novel stagger angle $\alpha(r)$ is calibrated such that the value of calibration constant $K_f$ is relatively unchanged with respect to the prior art rotor, from approximately 0.87, as described above, to approximately 0.83 for the novel design. In other embodiments the stagger angle may be calibrated such that calibration constant $K_f$ is substantially increased or decreased with respect to the prior art, or such that calibration constant $K_f$ is tailored to a specific novel flow meter application.

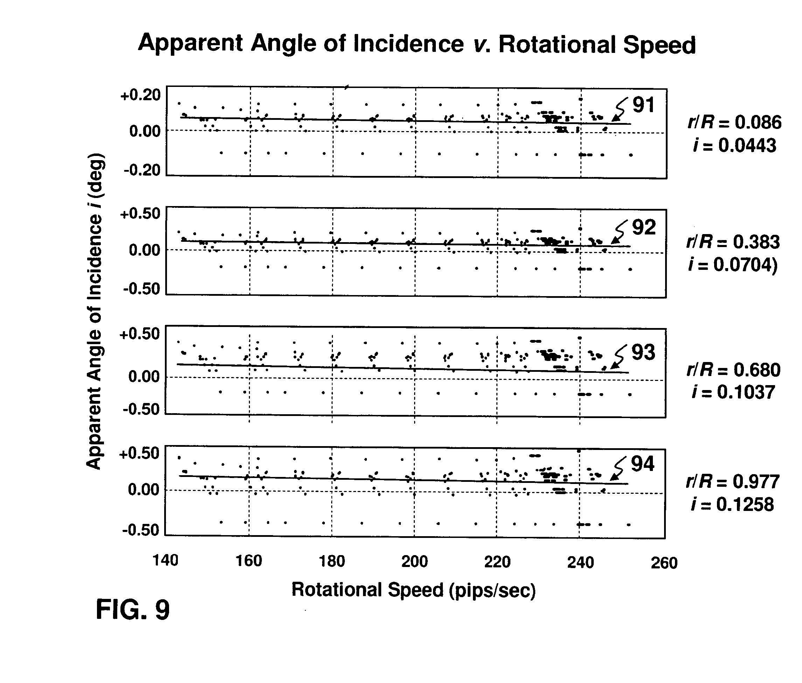

FIG. 9 is a series of calibration plots showing apparent angle of incidence $i(r)$ versus flow rate, obtained from hot-fire tests of prior art flow meter rotors. The plots are arranged in order, respectively, from lowest relative radius at the top to highest relative radius at the bottom.

FIG. 9 further illustrates the distinction between novel rotor blade 32 and the prior art. The average apparent angles of incidence $i(r)$ in TABLE 1, column 4 are simply the average values of linear fit lines 91, 92, 93 and 94 in FIG. 9, as determined according to the force and velocity decomposition of FIG. 6. Note the magnified vertical scale in the top plot, for relative radius $r/R = 8.6\%$, which ranges over $\pm 0.2°$ as opposed to $\pm 0.5°$ for the lower three plots.

The calibration plots in FIGS. 8 and 9 allow stagger angle $\alpha(r)$ to be "re-twisted" to reflect apparent angle of incidence $i(r)$, rather than idealized angle of incidence $i'(r)$. In the particular embodiment of novel rotor blade 32, however, note that the calibration data were acquired in a straight back flow straightener configuration, while novel rotor 30 will be deployed in a cut back configuration (compare upstream flow straightener 13 and downstream flow straightener 14 in FIG. 1).

Thus the SSME LH2 rotor calibration, as described here, requires both hot-fire testing of the prior art rotor in a prior art deployment, and mathematical modeling of the novel rotor in a novel deployment. In other applications, however, calibration may be accomplished solely from calibration testing of a prior art design, or solely from a mathematical or software model of a novel prototype, where the model incorporates nonlinearities in the fluid flow.

The data in FIGS. 8 and 9 (and TABLE 1) require two further comments. First, the data represent an average flow, integrated over rotational angle θ. Local effects due to the flow straightener wake and laminar flow regions are included in this average, but are not individually accounted for. This is due to the SSME design, which samples rotor speed at a single magnetic induction ("pip") sensor, and thus represents only one value of θ. In other embodiments, the rotor speed may be continuously sampled in order to provide additional calibration sensitivity to rotational effects.

Second, the calibration data represent the mean of a selected subset of ten prior art rotors. These data provide a mean sample design specification for the prior art rotor, averaged over the subset and averaged over many, many rotations, as performed during the hot-fire calibration tests. In other embodiments calibration may be based upon a single prior art rotor, or a single novel prototype, which may be either a physical prototype or a mathematical or software model of a prototype.

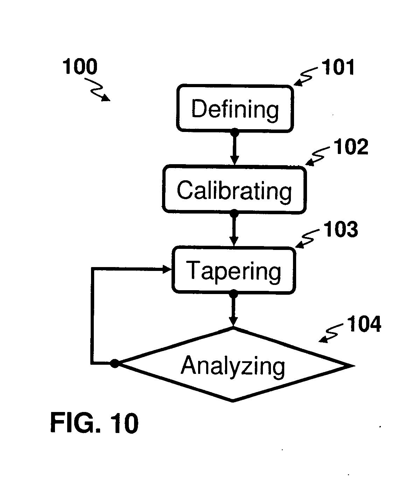

FIG. 10 is a flow chart showing method 100 for designing a frequency-tuned flow meter rotor having a rotor hub and a plurality of tapered rotor blades. Method 100 comprises defining a rotor blade cross-sectional profile (step 101), calibrating a rotor blade stagger angle (step 102), tapering the rotor blade cross-sectional profile (step 103), and analyzing the frequency-tuned rotor (step 104). Generally, tapering (step 103) and analyzing (step 104) are preformed iteratively, until analyzing (step 104) indicates that the rotor has satisfied a set of design criteria.

Defining (step 101) comprises defining the rotor blade cross-sectional profile as a function of radius $r$. Radius $r$ is defined by the rotor hub, and may be measured from an outside dimension of the rotor hub (as in FIG. 2) or a rotor axis oriented along a centerline of the rotor hub (see FIG. 1). The cross-sectional profile comprises a chord length $r(l)$ and a relative thickness $t(r)$. In a preferred embodiment, defining (step 101) comprises defining the cross-sectional profile based upon a prior art rotor blade, but in other embodiments defining (step 101) may comprise defining the cross-sectional profile based upon a novel prototype blade, where the prototype may be a physical prototype or a mathematical or software model of a prototype.

Calibrating (step 102) comprises calibrating the rotor blade stagger angle $\alpha(r)$ as a function of radial distance $r$, such that stagger angle $\alpha(r)$ reflects a difference between an idealized angle of incidence $i'(r)$ and an apparent angle of incidence $i(r)$. The idealized angle of incidence $i'(r)$ may characterize an idealized free-vortex rotor design in an idealized uniform axial flow, or it may characterize another rotor design. The apparent angle of incidence $i(r)$ characterizes nonlinearities in the flow, and may be obtained from hot-fire calibration tests of a prior art rotor, from another form of calibration test, or from a calibration comprising software or mathematical modeling. In a preferred embodiment, calibration (step 102) is a hybrid calibration, comprising both calibration tests of a prior art rotor and mathematical or software modeling.

Tapering (step 103) comprises tapering the rotor blade cross-sectional profile such that it characterizes an airfoil with a decreasing chord length $l(r)$ and relative thickness $t(r)$ as a function of radius $r$. In a preferred embodiment, the airfoil is a modified NACA four-digit series airfoil. In this embodiment the chord length decreases from approximately 109% of a reference chord length near the rotor hub to approximately 100% of a reference chord length near a blade tip, and the relative thickness decreases from approximately 30% of the chord length near the hub to approximately 13% of the chord length near the blade tip. In other embodiments the chord length and relative thickness may exhibit different variations. Alternatively, the airfoil may be an unmodified NACA four-digit series airfoil, a modified NACA five-digit series airfoil, an unmodified NACA five-digit series airfoil, a 1-series NACA airfoil, a 6-series NACA airfoil, a 7-series NACA airfoil, or an 8-series NACA airfoil.

Analyzing (step 104) comprises analyzing a natural oscillation frequency spectrum for the rotor. Analyzing (step 104) may comprise generating the natural oscillation frequency spectrum by translating the plurality of tapered rotor blade cross-sectional profiles into a mathematical or software model of the rotor, or, alternatively, by measuring the oscillations of a physical model or physical embodiment of the rotor. Analyzing (step 104) may further comprise generating the natural oscillation frequency spectrum in a hybrid manner, combining measurements of a physical model or physical embodiment with a mathematical or software model.

Analyzing (step 104) further comprises comparing the natural frequency spectrum to a range of operationally-induced excitation frequencies. In a preferred embodiment, the frequencies of a first and second bending mode in the natural frequency spectrum will exceed the range of operationally-induced excitation frequencies. In other embodiments the frequencies of particular modes in the natural frequency spectrum may fall below the range of operationally-induced excitation frequencies, or fall above or below a set of particular frequencies in the range of operationally induced excitation frequencies.

In a preferred embodiment, analyzing (step 104) further comprises generating a stress response function for the rotor. The stress response function characterizes displacements of the plurality of rotor blades as a function of operationally-induced stress and fatigue, and may also characterize displacements as a function of arbitrary stress and fatigue. In this embodiment, analyzing (step 104) also comprises analyzing a change in the stress response as a result of tapering (step 103). Generally, the change should characterize greater resistance to stress and fatigue.

The structural and functional details disclosed herein, and the specific terminology used, are for the purposes of description, not limitation. Although the present invention has been described with reference to preferred embodiments, workers skilled in the art will recognize that changes may be made in form and detail without departing from the spirit and scope of the invention.

**Claims**

1. A tapered, frequency-tuned turbine flow meter rotor for measuring a fluid flow, the rotor comprising:

   a rotor hub defining a radius measured from the rotor hub; and
   a plurality of rotor blades, each comprising a stagger angle that varies as a function of the radius and a cross-sectional profile that varies as a function of the radius;

wherein the cross-sectional profile characterizes a NACA airfoil at each radius.

2. The rotor of claim 1, wherein the plurality of rotor blades comprises four rotor blades.

3. The rotor of claim 1 or 2, wherein the NACA airfoil **characterized** at each radius is a modified NACA four-digit series airfoil.

4. The rotor of claim 1, 2 or 3, wherein the cross-sectional profile comprises a chord length as a function of radius and relative thickness as a function of the radius, and wherein:

the chord length decreases from a maximum of approximately 109% of a reference chord length at or near the rotor hub to a minimum of approximately 100% of the reference chord length at or near a blade tip;
the relative thickness decreases from a maximum of approximately 30% of the chord length at or near the rotor hub to a minimum of approximately 19% of the chord length at or near the blade tip; and
the airfoil **characterized** at each radius has a camber of no more than one percent.

5. The rotor of any preceding claim, wherein a frequency of a first bending mode of the rotor exceeds approximately 1,200 cycles per second.

6. The rotor of any preceding claim, wherein the fluid flow is a cryogenic fluid flow exceeding approximately 10,000 gallons per minute and wherein the rotor operates at a rotor speed exceeding approximately 3,800 rotations per minute.

7. The rotor of any preceding claim, wherein the stagger angle reflects an apparent angle of incidence based upon calibration testing in a non-idealized flow having a non-axial flow component, such that the stagger angle defines a calibration factor relating a flow rate to a rotor speed.

8. A tapered rotor blade for a turbine flow meter, the tapered rotor blade comprising:

a stagger angle that varies as a function of a radius defined by a rotor hub; and
a cross-sectional profile comprising a chord length that decreases as a function of the radius and a relative thickness that decreases as a function of the radius;

wherein the cross-sectional profile characterizes an airfoil at each radius.

9. The rotor blade of claim 8, wherein the airfoil **characterized** at each radius is one of a modified NACA four-digit series airfoil, an unmodified NACA four-digit series airfoil, a modified NACA five-digit series airfoil, or an unmodified NACA five-digit series airfoil.

10. The rotor blade of claim 8, wherein the airfoil **characterized** at each radius is one of a 1-series NACA airfoil, a 6-series NACA airfoil, a 7-series NACA airfoil, or an 8-series NACA airfoil.

11. The rotor blade of claim 8, 9 or 10, wherein the chord length decreases from a maximum not less than 109% of a reference chord length at or near the rotor hub to a minimum not exceeding 100% of the reference chord length at or near a blade tip, and the relative thickness decreases from a maximum not less than 30% of the chord length at or near the rotor hub to a minimum not more than 19% of the chord length at or near the blade tip.

12. The rotor blade of any of claims 8-11, wherein the airfoil **characterized** at each radius has a camber of not more than one percent.

13. The rotor blade of any of claims 8-12, wherein the stagger angle reflects an apparent angle of incidence based upon calibration testing in a non-idealized flow having a non-axial flow component, and such that the stagger angle defines a calibration factor relating a flow rate to a rotor speed.

14. A turbine flow meter for measuring a fluid flow, the turbine flow meter comprising:

a tapered, frequency-tuned flow meter rotor, the rotor comprising:

a rotor hub defining a radius measured from the rotor hub, and
a plurality of rotor blades, each comprising a stagger angle that varies as a function of the radius and a cross-sectional profile that varies as a function of the radius,
wherein the cross-sectional profile characterizes an airfoil at each radius;

an upstream flow straightener; and
a downstream flow straightener.

15. The turbine flow meter of claim 14, wherein the cross-sectional profile comprises a chord length that decreases as a function of the radius and a relative thickness that decreases as a function of the radius.

16. The turbine flow meter of claim 14 or 15, wherein the airfoil **characterized** at each radius is a NACA airfoil.

17. The turbine flow meter of claim 14, 15 or 16, wherein a frequency of a first bending mode of the rotor exceeds a range of operationally-induced excitation frequencies.

18. The turbine flow meter of any of claims 14-17, wherein the fluid flow is a cryogenic fluid flow.

19. The turbine flow meter of any of claims 14-18, wherein the upstream flow straightener and the downstream flow straightener have a hexagonal channel design.

20. The turbine flow meter of any of claims 14-19, wherein the downstream flow straightener has a cut back configuration.

21. The turbine flow meter of any of claims 14-20, wherein:

the flow meter rotor is deployed in a downstream direction from the downstream flow straightener, and less than two inches from the downstream flow straightener; and
the upstream flow straightener is deployed in an upstream direction from the downstream flow straightener.

22. A method for designing a frequency-tuned flow meter rotor, the rotor having a rotor hub and a plurality of tapered rotor blades, and the method comprising:

defining a cross-sectional profile as a function of a radius defined by the rotor hub, wherein the cross-sectional profile comprises a chord length as a function of the radius and a relative thickness as a function of the radius;
calibrating a stagger angle as a function of the radius and as a function of a difference between an idealized angle of incidence and an apparent angle of incidence;
tapering the cross-sectional profile such it characterizes an airfoil at each radius, and such that the chord length and the relative thickness each decrease as a function of the radius; and
analyzing the natural oscillation frequency spectrum of the rotor with respect to a range of operationally-induced excitation frequencies.

23. The method of claim 22, wherein the airfoil **characterized** at each radius is one of a modified NACA four-digit series airfoil, an unmodified NACA four-digit series airfoil, a modified NACA five-digit series airfoil, or an unmodified NACA five-digit series airfoil.

24. The method of claim 22 or 23, wherein the frequency of a first bending mode in the natural oscillation frequency spectrum exceeds the range of operationally-induced excitation frequencies.

25. The method of claim 22, 23 or 24, wherein analyzing further comprises analyzing a change in a stress response function as a result of tapering, and wherein the change in the stress response function characterizes greater resistance to stress and fatigue.

FIG. 1

FIG. 2

FIG. 3

FIG. 4

**FIG. 5**

FIG. 6

**FIG. 7**

EP 1 956 347 A2

**Fuel Flow v. Rotational Speed**

FIG. 8

EP 1 956 347 A2

**Apparent Angle of Incidence *v.* Rotational Speed**

FIG. 9

FIG. 10